# EUROPEAN PATENT SPECIFICATION

(11) **EP 2 697 505 B1**
(45) Date of publication and mention of the grant of the patent: **04.03.2015**
(21) Application number: 12748016.8
(22) Date of filing: 10.08.2012
(51) Int. Cl.: F03D 1/00, F03D 11/00

(54) **DIRECT-DRIVE WIND TURBINE**
WINDTURBINE MIT DIREKTANTRIEB
ÉOLIENNE À COMMANDE DIRECTE

(30) Priority: 08.09.2011 EP 11180612
(43) Date of publication of application: 19.02.2014
(73) Proprietor: Siemens Aktiengesellschaft, 80333 München (DE)
(72) Inventor: PEDERSEN, Bo, DK-7620 Lemvig (DK); THOMSEN, Kim, DK-7430 Ikast (DK)
(86) International application number: PCT/EP2012/065674
(87) International publication number: WO 2013/034390

(56) References cited:
- WO-A1-2011/051538
- AT-A1- 507 397
- US-A- 5 271 676
- US-A1- 2011 188 988
- US-B1- 7 431 567

## Description

The invention relates to a direct driven wind turbine with a plain bearing and a service method for this bearing.

A wind turbine transfers wind energy into electrical energy. The moving air accelerates the rotor of the wind turbine. The rotation of the rotor is transferred to an electrical generator. The electrical generator transforms the rotational energy into electrical energy.

In the last years the concept of a direct driven wind turbine was established. In a direct driven wind turbine the rotational energy of the rotor is transferred to the generator directly without the use of a gearbox.

In a direct driven wind turbine the rotor of the wind turbine is directly connected to the rotor of the electrical generator. The chain of mechanically connected parts leading from the rotor of the wind turbine to the rotor of the generator is called the drive train of the wind turbine.

To allow the rotational movement and to provide the necessary stability of the rotating parts, the drive train is mounted with at least one bearing. This bearing allows the drive train to rotate. At the same time it provides the necessary stability by supporting the radial and axial loads and the bending moments present in the drive train.

AT 507397 A1 describes a plain bearing for a shaft of a hub of a wind turbine, whereby the hub comprises rotor blades, consisting of a plain bearing part, and a bearing surface facing the shaft, and a supporting element that is arranged under the supporting element. The supporting lement comprises a carrying element or a carrying construction at its surface or at least partially within.

US 5271676 A described a bearing pedestal for the rotating shaft that includes journal and axial thrust bearings. Both of the journal and thrust bearings have passages, and recesses in the respective pad faces for flowing high pressure lubricant between the pads and the shaft to displace the shaft and pads relative to one another to minimize the required breakaway torque and metal-to-metal contact. Each thrust bearing includes a plurality of circumferentially spaced pads and lubricant directors between the pads. The lubricant director includes a rib extending generally tangentially and radially outwardly to channel lubricant from a preceding pad to a succeeding pad in the direction of shaft rotation and to channel the lubricant for flow tangentially from the thrust bearing into an annular cavity for return to sump. An end seal assembly includes an element having internal and external labyrinth seals straddling an annular groove opening onto the shaft. An annular recess is provided along the inner surface of element to receive lubricant splashed from the tangential flow and direct it into the cavity. Drain back openings flow lubricant from the labyrinth seals into the cavity.

WO 2011/051538 A1 describes a wind power station, which comprises a vertical tower, a rotor that comprises a hub part and blades that is fitted to the top end of the tower and that is aligned into the wind and rotated by the wind. A rotor shaft, which transmits rotating motion to a generator connected to the aforementioned shaft in a direct-drive power station and to a gear box in a geared power station. And also a revolving frame that is fitted to the top end of the tower on bearings so as to rotate around the vertical axis, in which frame the rotor shaft is also mounted on bearings. For mounting the revolving frame on bearings onto the top part of the tower, the top part of the tower comprises a first bearing that mainly bears at least the vertical load coming from the revolving frame. As well as a second bearing disposed at a distance H from the aforementioned bearing, in which case one of the bearings bears mainly the radial load coming from the revolving frame and in which case the support of the upper one of the aforementioned bearings is arranged by means of a support piece leaving the tower and fitted inside the revolving frame.

US 2011/0188988 A1 describes a plain bearing assembly for mounting a blade to a hub of a wind turbine includes an outer member mountable to one of the blade or hub, and an inner member mountable to the other of the blade or hub and movable relative to the outer member. The plain bearing further includes fluid cavities associated with one of the outer or inner member and arranged to confront the other of the outer or inner member. The fluid cavities are coupled to a pressure source for establishing a pressurized fluid film between the inner and outer members. A method includes monitoring at least one parameter of the fluid film, comparing the at least one parameter to a threshold criteria, and altering a dynamic state of the wind turbine and/or altering the state of the blade bearing assembly if the threshold criteria is exceeded.

WO 2011/003482 A2 describes a wind turbine main bearing realized to bear a shaft of a wind turbine. The bearing comprises a fluid bearing with a plurality of bearing pads. The document describes a bearing with a cylindrical bearing surface and a series of trust pads.

The plain bearing has to provide a large surface to withstand the forces present in the drive train. As a consequence the pads used for the cylindrical bearing surface are very large, heavy and difficult to exchange.

For the exchange of the bearing pads the shaft of the wind turbine needs to be lifted by help of a lifting arrangement.

It is the aim of the invention to provide a wind turbine with a plain bearing that enables a service of the bearing and an exchange of the bearing pads without the use of heavy equipment.

The aim is reached by the features of the independent claim. Preferred embodiments of the invention are described in the dependent claims.

A rotor of the wind turbine is directly connected with a rotatable drive train of the wind turbine. The rotatable drive train is directly connected with a rotor of an electrical generator of the wind turbine.

The rotatable drive train is connected with a stationary part of the wind turbine via at least one bearing, which allows the rotation of the drive train in relation to the stationary part.

The electrical generator provides a support structure to which the stationary side of the at least one bearing is mounted. The at least one bearing is a plain bearing and the plain bearing comprises a wear-and-tear-part, which is an object to be exchanged.

The rotatable drive train is prepared to be fastened to the stationary part of the wind turbine and at least one wear-and-tear-part of the plain bearing is exchangeable while the rotatable drive train is fastened to the stationary part.

The drive train of a wind turbine transfers the rotational energy of the rotor of the wind turbine to the electrical generator of the wind turbine. The drive train is a mechanical chain of parts connecting the rotor of the wind turbine and the rotor of the electrical generator. The drive train is rotating when the wind turbine is in operation.

The stationary part of the wind turbine comprises the stator of the electrical generator and the nacelle construction that is prepared to transfer the loads of the drive train and the weight of the rotor of the wind turbine and the nacelle to the tower of the wind turbine.

The drive train of the wind turbine and the rotor of the generator are connected to the stationary part of the wind turbine via at least one bearing.

The bearing comprises a rotatable side that is connected to the rotatable drive train and a stationary side that is connected to the stationary part of the wind turbine.

The stator of the electrical generator comprises a support structure which connects the stator of the electrical generator to the stationary part of the wind turbine. The stationary side of the bearing is connected to the support structure of the electrical generator.

A plain bearing is a bearing without rolling elements, like balls or rollers. A plain bearing is also known as a sliding bearing, a friction bearing or a floating bearing.

Several parts of the bearing experience a certain wear due to the operation of the wind turbine and thus the rotation of the bearing. These parts have a limited lifespan that is shorter then the expected lifespan of the bearing, and have to be exchanged regularly to continue the operation of the wind turbine. These parts are called wear-and-tear-parts and they are checked and/or exchanged during maintenance and service.

To access and exchange the wear-and-tear-parts in the bearing of the wind turbine, the rotatable part of the wind turbine is fastened to the stationary part of the wind turbine. Thus the weight of the rotor of the wind turbine, the drive train and the rotor of the generator is transferred to the stationary part of the wind turbine via the fastened connection between the drive train and the stationary part.

The drive train is fixed in its position by the fastened connection. Thus the bearing is not needed to transfer the weight, when the drive train is fastened to the stationary part of the wind turbine. Thus the bearing is free of loads from the drive train. Thus the bearing can be opened and the wear-and-tear-parts in the bearing can be exchanged.

The bearing is opened and the wear-and-tear-parts are accessible and exchangeable, while the drive train is fastened to the stationary part of the wind turbine. Thus no heavy part of the wind turbine has to be lifted to access and/or exchange the wear-and-tear-parts.

Thus no crane is needed for the exchange of wear-and-tear-parts in the bearing. Thus time is saved and no heavy machinery is needed during maintenance and service for the exchange of wear-and-tear-parts in the bearing.

In a preferred configuration the bearing comprises a ring that is detachable from the bearing for an exchange of at least one wear-and-tear-part of the bearing.

The bearing comprises a ring that closes the bearing. The axis of rotation of the ring is the same as the axis of rotation of the bearing.

To open the bearing for the exchange of a wear-and-tear-part the ring can be detached from the bearing to allow maintenance personnel access to the wear-and-tear-parts that have to be exchanged.

Preferably the ring is at least a part of the rotatable side or at least a part of the stationary side of the plain bearing. Thus the sliding surface is directly accessible when the ring is removed.

In another preferred configuration the ring is an additional ring mounted to the rotatable side or the stationary side of the bearing to close the bearing. Thus the alignment of the rotatable side and the stationary side of the bearing is not changed when the ring is removed and the bearing is opened for maintenance and service.

Thus only the ring has to be detached to access the wear-and-tear-parts. Thus the bearing can be opened very easily without the use of heavy tools. Thus time and material is saved during maintenance and service.

In a preferred configuration the ring is segmented.

Thus a segment of the ring is less heavy and smaller then the whole ring. Thus the segment of the ring is easier to handle inside the wind turbine then the whole ring. Thus fewer tools and fewer personnel are needed for the service of the bearing.

In a preferred configuration at least a part of the ring is detachable to open the bearing for the exchange of the wear-and-tear-part.

Thus the bearing is opened to access and exchange the wear-and-tear-parts of the bearing. Thus the exchange of the wear-and-tear-parts is possible.

The bearing can be opened partially by detaching a part of the ring. Thus only the part of the bearing is opened, where wear-and-tear-parts have to be exchanged. Thus the rest of the bearing stays closed and is therefore protected from dust and particles present in the surrounding of the bearing.

Dust and particles are present in the surrounding of the bearing and they reduce the lifetime of the bearing when they come into the bearing and the bearing is in operation again.

In a preferred configuration the bearing comprises a sealing and/or a sliding surface.

In a preferred configuration the wear-and-tear-part is the sealing of the bearing and the sealing of the bearing is an object to be exchanged.

The bearing comprises a sealing. This is sealing the bearing so that the lubrication stays within the bearing and dust or particles present in the surrounding of the bearing can not get into the bearing. The sealing is located between the rotatable side and the stationary side of the bearing. The sealing is also a wear-and-tear-part that needs to be exchanged regularly.

Preferably the sealing is exchanged when the bearing is opened. Thus the sealing can be exchanged during maintenance and service as a wear-and-tear-part. Thus also the sealing can be exchanged without the need to exchange the whole bearing and/or without the use of heavy machinery.

In a preferred configuration the sliding surface of the bearing is segmented and the segments are arranged and connected within the plain bearing in a way that the exchange of an individual segment is permitted.

In a preferred configuration the wear-and-tear-part is the sliding surface of the bearing and at least a segment of the sliding surface is an object to be exchanged.

The plain bearing comprises a sliding surface at a first side of the bearing that slides along the second side of the bearing when the bearing is rotating. The sliding surface experiences a certain friction that leads to wear on the sliding surface. The sliding surface therefore needs to be exchanged after a predetermined time span. So the sliding surface is a wear-and-tear-part.

The sliding surface is exchanged when the bearing is opened. Thus the sliding surface of the bearing is exchanged and the rest of the bearing stays in the wind turbine. Thus a complete exchange of the bearing is avoided. Thus time is saved in maintenance and service and no heavy machinery is needed to lift parts of the wind turbine.

Preferably the sliding surface is segmented and individual segments of the sliding surface are exchanged.

Thus an exchange of a part of the sliding surface is possible. Thus the sliding surface doesn't have to be exchanged completely. Thus material and time is saved during maintenance and service.

In a preferred configuration the support structure of the generator comprises an opening, which can be used as a man hole.

Thus personnel in maintenance and service are able to access the support structure of the electrical generator and/or pass through at least a part of the structure. Thus the personnel are able to access an area, like the area where the drive train is fastened to the stationary part of the wind turbine, or an area at the bearing to allow the exchange of wear-and-tear-parts. Thus the access to areas needed for maintenance and service is provided from inside the wind turbine and without the need to detach parts of the wind turbine or the nacelle of the wind turbine.

In a preferred configuration the generator comprises a cavity along the axis of rotation of the generator.

Preferably the cavity is big enough for personnel in maintenance to crawl through. Most preferably it is big enough for personnel in maintenance to walk through. The cavity can reach into the electrical generator. Thus personnel in maintenance are able to access the inner part of the generator or the support structure or the bearing for the exchange of wear-and-tear-parts.

Preferably the cavity reaches through the electrical generator. Thus the personnel in maintenance can cross the generator to reach the other end of the generator. Thus the personnel don't have to detach parts of the structure of the nacelle or the generator to access the other side of the generator.

Thus access to the other end of the generator seen along the axis of rotation is possible. Thus the bearing can be reached easily for the exchange of wear-and-tear-parts and exchange parts can be transported to the bearing through the nacelle of the wind turbine.

In a preferred configuration the opening is accessible from the cavity of the generator.

Thus personnel in maintenance move through the cavity to access the opening. The opening is located close to the connection where the drive train is fastened to the stationary part of the wind turbine. Thus the connection is directly accessible through the opening.

Thus the opening is located close to the bearing. Thus the wear-and-tear-parts that need to be exchanged through the opening can be exchanged directly.

In a preferred configuration the generator comprises a shaft and the opening in the support structure of the generator is accessible in axial direction along the shaft.

In this configuration the generator comprises a shaft. The shaft leads through the generator. The support structure connects the stator of the generator to the shaft. The opening is located in the support structure to allow the access into the support structure.

Thus personnel in maintenance and service can directly access the connection point, where the drive train is fastened to the stationary part of the wind turbine, and/or the bearing through the opening.

Thus the drive train can be fastened to the stationary part through that opening. Thus the access to the bearing and the exchange of the wear-and-tear-parts is possible through the opening.

The invention is shown in more detail by the help of figures. The figures show a preferred configuration and do not limit the scope of the invention.
FIG 1 shows a cut through the direct driven wind turbine.
FIG 2 shows the drive train fastened to the stationary part of the wind turbine.
FIG 3 shows the ring detached from the bearing.
FIG 4 shows the exchange of the wear-and-tear-parts.
FIG 5 shows another embodiment of the wind turbine.

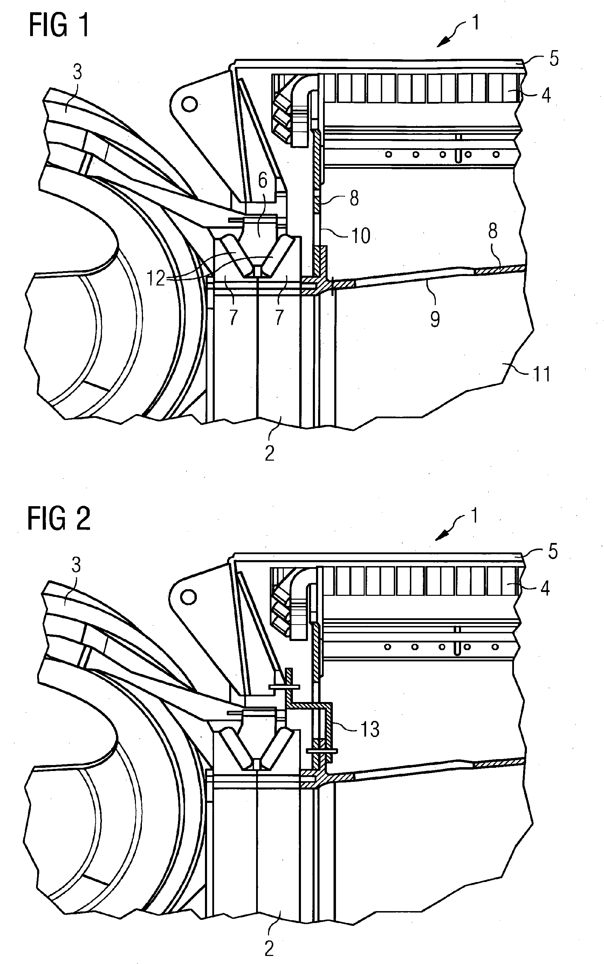

FIG 1 shows a cut through the direct driven wind turbine.

FIG 1 shows a cut through a part of the electrical generator 1, the bearing 2 and a part of the hub 3. The electrical generator 1 comprises a stator 4 and a rotor 5. The rotor 5 is connected to the rotatable side 6 of the bearing 2 and to the hub 3 of the wind turbine.

The stator 4 comprises the support structure 8. The support structure 8 comprises an opening 9 that can be used as a man hole and an opening 10 that allows the access to the area where the drive train is fastened to the stationary part of the wind turbine.

The generator 1 comprises a cavity 11 in the area within the support structure 8. The opening 9 is accessible from the cavity 11.

The bearing 2 comprises a rotatable side 6 and a stationary side 7. The rotatable side 6 is connected to the rotor 5 of the generator 1 and to the Hub 3. The stationary side 7 is connected to the support structure 8 of the generator of the wind turbine. The bearing 2 further comprises a sliding surface 12 that is located between the rotatable side 6 and the stationary side 7 of the bearing.

FIG 2 shows the drive train fastened to the stationary part of the wind turbine.

FIG 2 shows the same construction as described under FIG 1. In addition the drive train is fastened to the stationary part of the wind turbine. Fastening means 13 are introduced that are bolted to the rotor 5 and the support structure 8 of the stator 4 of the generator 1. The fastening means 13 transfer the weight of the components of the drive train and the wind loads acting on the blades and the hub to the stationary part of the wind turbine. Thus the bearing 2 is not necessary to carry the weight and the loads of the components of the drive train as long as the fastening means 13 are in place.

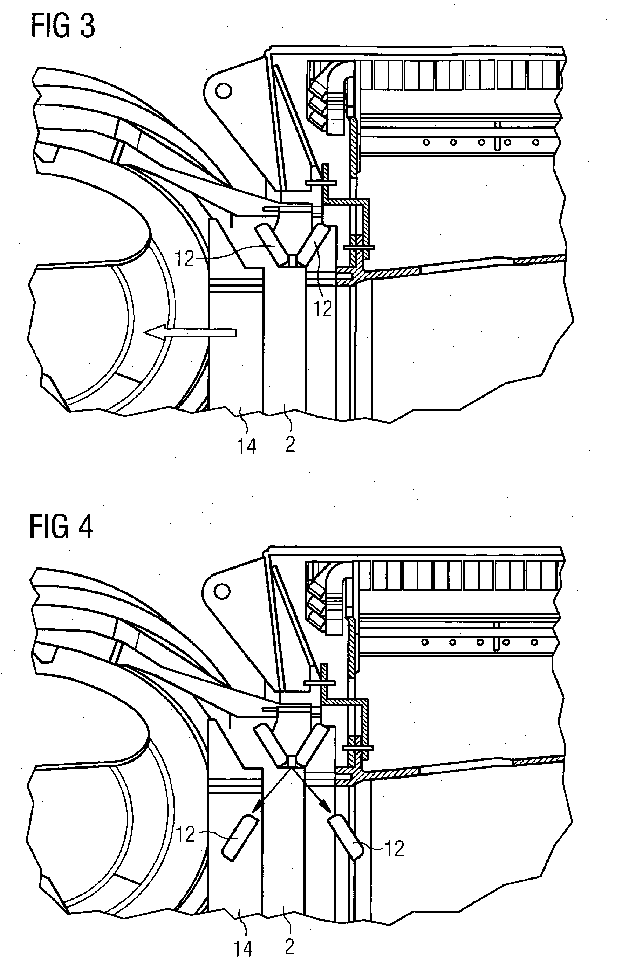

FIG 3 shows the ring detached from the bearing.

FIG 3 shows the same construction as described under FIG 1 and FIG 2. In addition the ring 14 of the bearing 2 is detached from the bearing 2. The ring 14 is moved in the direction of the arrow.

This can also be a segment of the ring that is detached from the bearing 2. When the ring 14 is detached from the bearing 2 access to the wear-and-tear-parts is provided. In this case the sliding surface 12 is accessible and can be exchanged.

FIG 4 shows the exchange of the wear-and-tear-parts.

FIG 4 shows the same construction as described under FIG 1, FIG 2 and FIG 3.

In addition it is shown how the sliding surface 12 or parts of a segmented sliding surface can be exchanged by pulling them out of the bearing 2 and introducing new parts in the same way.

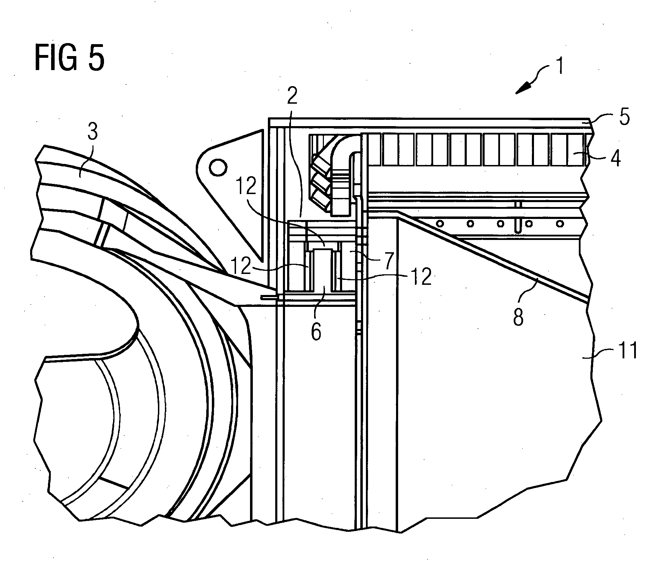

FIG 5 shows another embodiment of the wind turbine.

Fig 5 shows a cut through a part of the electrical generator 1, the bearing 2 and a part of the hub 3. The electrical generator 1 comprises a stator 4 and a rotor 5. The rotor 5 is connected to the rotatable side 6 of the bearing 2 and to the hub 3 of the wind turbine.

The stator 4 comprises the support structure 8. The generator 1 comprises a cavity 11 in the area within the support structure 8.

The bearing 2 comprises a rotatable side 6 and a stationary side 7. The bearing 2 further comprises a sliding surface 12 that is located between the rotatable side 6 and the stationary side 7.

In this configuration the bearing 2 is accessible from the cavity 11 in the generator 1. After the drive train is fixed to the stationary part of the wind turbine, the bearing 2 can be opened by detaching segments of the rotatable side 6 of the bearing, or a ring of the stationary side 7 of the bearing 2. After opening the bearing 2 the wear-and-tear-parts like the sliding surface 12 or segments of the sliding surface can be exchanged.

## Claims

1. Direct-drive wind turbine,
- wherein a rotor of the wind turbine is directly connected with a rotatable drive train of the wind turbine,
- wherein the rotatable drive train is directly connected with a rotor (5) of an electrical generator (1) of the wind turbine,
- wherein the rotatable drive train is connected with a stationary part of the wind turbine via at least one bearing (2), which allows the rotation of the drive train in relation to the stationary part,
- wherein the electrical generator (1) provides a support structure (8) to which the stationary side (7) of the at least one bearing (2) is mounted,
- wherein the at least one bearing (2) is a plain bearing
- wherein the plain bearing (2) comprises a wear-and-tear-part, which is an object to be exchanged,
**characterized in that**
- the rotatable drive train is prepared to be fastened to the stationary part of the wind turbine, so that the drive train is fixable in its position by the fastened connection, so that the weight of the rotor of the wind turbine, the drive train and the rotor of the generator is transferred to the stationary part of the wind turbine via the fastened connection between the drive train and the stationary part,
- wherein at least one wear-and-tear-part of the plain bearing (2) is exchangeable while the rotatable drive train is fastened to the stationary part.

2. Direct-driven wind turbine according to claim 1, wherein the bearing (2) comprises a ring (14) that is detachable from the bearing (2) for an exchange of at least one wear-and-tear-part of the bearing (1).

3. Direct-driven wind turbine according to claim 2, wherein the ring (14) is segmented.

4. Direct-driven wind turbine according to claim 2 or claim 3, wherein at least a part of the ring (14) is detachable to open the bearing (2) for the exchange of the wear-and-tear-part.

5. Direct-driven wind turbine according to one of the preceding claims, wherein the bearing (2) comprises a sealing and/or a sliding surface (12).

6. Direct-driven wind turbine according to claim 5, wherein the wear-and-tear-part is the sealing of the bearing (2) and the sealing of the bearing (2) is an object to be exchanged.

7. Direct-driven wind turbine according to claim 5, wherein the sliding surface (12) of the bearing (2) is segmented and the segments are arranged and connected within the plain bearing (2) in a way that the exchange of an individual segment is permitted.

8. Direct-driven wind turbine according to claim 7, wherein the wear-and-tear-part is the sliding surface (12) of the bearing (2) and at least a segment of the sliding surface (12) is an object to be exchanged.

9. Direct-driven wind turbine according to one of the preceding claims, wherein the support structure (8) of the generator (1) comprises an opening (9, 10), which can be used as a man hole.

10. Direct-driven wind turbine according to claim 9, wherein the generator (1) comprises a cavity (11) along the axis of rotation of the generator.

11. Direct-driven wind turbine according to claim 10, wherein the opening (9, 10) is accessible from the cavity (11) of the generator (1).

12. Direct-driven wind turbine according to claim 8, wherein the generator (1) comprises a shaft and the opening in the support structure (8) of the generator is accessible in axial direction along the shaft.

13. Method to exchange the sliding surface of a direct-drive wind turbine according to claim 1 comprising the steps of
- fixing the rotatable part of the drive train of the wind turbine to the stationary part of the wind turbine,
- opening the plain bearing (2) to access the wear-and-tear-part of the bearing,
- exchanging the wear-and-tear-part of the plain bearing.

## Patentansprüche

1. Windturbine mit Direktantrieb,
- wobei ein Rotor der Windturbine direkt mit einem drehbaren Antriebsstrang der Windturbine verbunden ist,
- wobei der drehbare Antriebsstrang direkt mit einem Rotor (5) eines elektrischen Generators (1) der Windturbine verbunden ist,
- wobei der drehbare Antriebsstrang mit einem stationären Teil der Windturbine über mindestens ein Lager (2) verbunden ist, welches die Drehung des Antriebsstrangs bezüglich des stationären Teils ermöglicht,
- wobei der elektrische Generator (1) eine Stützkonstruktion (8) bereitstellt, an welcher die stationäre Seite (7) des mindestens einen Lagers (2) angebracht ist,
- wobei das mindestens eine Lager (2) ein Gleitlager ist,
- wobei das Gleitlager (2) ein Verschleißteil umfasst, welches ein auszutauschendes Objekt ist,
**dadurch gekennzeichnet, dass**
- der drehbare Antriebsstrang dafür vorbereitet ist, an dem stationären Teil der Windturbine befestigt zu werden, sodass der Antriebsstrang durch die befestigte Verbindung in seiner Position fixierbar ist, sodass das Gewicht des Rotors der Windturbine, des Antriebsstrangs und des Rotors des Generators über die befestigte Verbindung zwischen dem Antriebsstrang und dem stationären Teil auf den stationären Teil der Windturbine übertragen wird,
- wobei mindestens ein Verschleißteil des Gleitlagers (2) austauschbar ist, während der drehbare Antriebsstrang an dem stationären Teil befestigt ist.

2. Windturbine mit Direktantrieb nach Anspruch 1, wobei das Lager (2) einen Ring (14) umfasst, welcher für einen Austausch mindestens eines Verschleißteils des Lagers (1) von dem Lager (2) lösbar ist.

3. Windturbine mit Direktantrieb nach Anspruch 2, wobei der Ring (14) segmentiert ist.

4. Windturbine mit Direktantrieb nach Anspruch 2 oder Anspruch 3, wobei wenigstens ein Teil des Ringes (14) lösbar ist, um das Lager (2) zum Austausch des Verschleißteils zu öffnen.

5. Windturbine mit Direktantrieb nach einem der vorhergehenden Ansprüche, wobei das Lager (2) eine Dichtung und/oder eine Gleitfläche (12) umfasst.

6. Windturbine mit Direktantrieb nach Anspruch 5, wobei das Verschleißteil die Dichtung des Lagers (2) ist und die Dichtung des Lagers (2) ein auszutauschendes Objekt ist.

7. Windturbine mit Direktantrieb nach Anspruch 5, wobei die Gleitfläche (12) des Lagers (2) segmentiert ist und die Segmente innerhalb des Gleitlagers (2) auf eine solche Weise angeordnet und verbunden sind, dass der Austausch eines einzelnen Segments ermöglicht wird.

8. Windturbine mit Direktantrieb nach Anspruch 7, wobei das Verschleißteil die Gleitfläche (12) des Lagers (2) ist und mindestens ein Segment der Gleitfläche (12) ein auszutauschendes Objekt ist.

9. Windturbine mit Direktantrieb nach einem der vorhergehenden Ansprüche, wobei die Stützkonstruktion (8) des Generators (1) eine Öffnung (9, 10) umfasst, welche als ein Mannloch verwendet werden kann.

10. Windturbine mit Direktantrieb nach Anspruch 9, wobei der Generator (1) einen Hohlraum (11) entlang der Drehachse des Generators umfasst.

11. Windturbine mit Direktantrieb nach Anspruch 10, wobei die Öffnung (9, 10) von dem Hohlraum (11) des Generators (1) aus zugänglich ist.

12. Windturbine mit Direktantrieb nach Anspruch 8, wobei der Generator (1) eine Welle umfasst und die Öffnung in der Stützkonstruktion (8) des Generators in axialer Richtung entlang der Welle zugänglich ist.

13. Verfahren zum Austauschen der Gleitfläche einer Windturbine mit Direktantrieb nach Anspruch 1, welches die folgenden Schritte umfasst:
- Befestigen des drehbaren Teils des Antriebsstrangs der Windturbine an dem stationären Teil der Windturbine,
- Öffnen des Gleitlagers (2), um Zugang zu dem Verschleißteil des Lagers zu erhalten,
- Austauschen des Verschleißteils des Gleitlagers.

## Revendications

1. Eolienne à entraînement direct,
- dans laquelle un rotor de l'éolienne est directement raccordé à une transmission rotative de l'éolienne,
- dans laquelle la transmission rotative est directement raccordée à un rotor (5) d'un générateur électrique (1) de l'éolienne,
- dans laquelle la transmission rotative est raccordée à une pièce stationnaire de l'éolienne par l'intermédiaire d'au moins un palier (2), ce qui permet la rotation de la transmission par rapport à la pièce stationnaire,
- dans laquelle le générateur électrique (1) fournit une structure (8) formant support, sur laquelle est monté le côté stationnaire (7) du au moins un palier (2),
- dans laquelle le au moins un palier (2) est un palier lisse,
- dans laquelle le palier lisse (2) comprend une pièce d'usure, qui est un objet devant être échangé,
**caractérisée en ce que**
- la transmission rotative est prête à être assujettie à la partie stationnaire de l'éolienne, de telle sorte que la transmission puisse être fixée dans sa position par le raccordement assujetti, de telle sorte que le poids du rotor de l'éolienne, de la transmission et du rotor du générateur, soit transmis à la partie stationnaire de l'éolienne par l'intermédiaire du raccordement assujetti entre la transmission et la partie stationnaire,
- dans laquelle au moins une pièce d'usure du palier lisse (2) peut être échangée, tandis que la transmission rotative est assujettie à la partie stationnaire.

2. Eolienne à entraînement direct selon la revendication 1, dans laquelle le palier (2) comprend une bague (14) qui peut être détachée du palier (2), pour un échange d'au moins une pièce d'usure du palier (1).

3. Eolienne à entraînement direct selon la revendication 2, dans laquelle la bague (14) est segmentée.

4. Eolienne à entraînement direct selon la revendication 2 ou 3, dans laquelle au moins une partie de la bague (14) peut être détachée pour ouvrir le palier (2) pour permettre l'échange de la pièce d'usure.

5. Eolienne à entraînement direct selon l'une des revendications précédentes, dans laquelle le palier (2) comprend un élément d'étanchéité et/ou une surface de glissement (12).

6. Eolienne à entraînement direct selon la revendication 5, dans laquelle la pièce d'usure est l'élément d'étanchéité du palier (2), et l'élément d'étanchéité du palier (2) est un objet devant être échangé.

7. Eolienne à entraînement direct selon la revendication 5, dans laquelle la surface de glissement (12) du palier (2) est segmentée, et les segments sont arrangés et raccordés à l'intérieur du palier lisse (2) de façon à permettre l'échange d'un segment individuel.

8. Eolienne à entraînement direct selon la revendication 7, dans laquelle la pièce d'usure est la surface de glissement (12) du palier (2), et au moins un segment de la surface de glissement (12) est un objet devant être échangé.

9. Eolienne à entraînement direct selon l'une des revendications précédentes, dans laquelle la structure (8) formant support du générateur (1) comprend une ouverture (9, 10) qui peut être utilisée en tant que trou d'homme.

10. Eolienne à entraînement direct selon la revendication 9, dans laquelle le générateur (1) comprend une cavité (11) le long de l'axe de rotation du générateur.

11. Eolienne à entraînement direct selon la revendication 10, dans laquelle l'ouverture (9, 10) est accessible à partir de la cavité (11) du générateur (1).

12. Eolienne à entraînement direct selon la revendication 8, dans laquelle le générateur (1) comprend un arbre, et l'ouverture dans la structure (8) formant support du générateur est accessible dans la direction axiale le long de l'arbre.

13. Procédé pour échanger la surface de glissement d'une éolienne à entraînement direct selon la revendication 1, comprenant les étapes consistant à :
- fixer la partie rotative de la transmission de l'éolienne à la partie stationnaire de l'éolienne,
- ouvrir le palier lisse (2) pour accéder à la pièce d'usure du palier,
- échanger la pièce d'usure du palier lisse.
